# EUROPÄISCHE PATENTANMELDUNG

(11) **EP 3 806 217 A1**
(43) Veröffentlichungstag der Anmeldung: **14.04.2021**
(21) Anmeldenummer: 19202862.9
(22) Anmeldetag: 11.10.2019
(51) Int. Cl.: H01M 10/04, H01M 10/0525, H01M 10/0587

(54) **ENERGIESPEICHERELEMENT UND HERSTELLUNGSVERFAHREN**

(71) Anmelder: VARTA Microbattery GmbH, 73479 Ellwangen Jagst (DE)
(72) Erfinder: Barenthin, Nils, 73479 Ellwangen (DE)
(74) Vertreter: Patentanwaltskanzlei Cartagena

(57) **Zusammenfassung**

Ein Energiespeicherelement (100) umfasst
• ein einen Innenraum (114) einschließendes Gehäuse (101), das aus einem ersten metallischen Gehäuseteil (103) und einem zweiten metallischen Gehäuseteil (104) zusammengesetzt ist und das eine kreisförmige Oberseite (101a) und eine kreisförmige Unterseite (101c), die voneinander beabstandet und zueinander parallel sind, sowie eine die Oberseite (101a) und die Unterseite (101c) verbindende ringförmige Gehäuseseitenwand (101b) aufweist, und
• einen in dem Innenraum (114) angeordneten Wickel (106), der eine bandförmige positive und eine bandförmige negative Elektrode und einen zwischen den Elektroden angeordneten bandförmigen Separator umfasst, die spiralförmig um eine Wickelachse (113) gewickelt sind, wobei
• der Wickel (106) eine erste Stirnseite (106a) und eine zweite Stirnseite (106b) sowie eine ringförmig umlaufende Wickelaußenseite (106c) aufweist,
• die Stirnseiten (106a, 106b) in Richtung der kreisförmigen und zueinander parallelen Oberseite (101a) und Unterseite (101c) weisen, so dass die Wickelachse (113) senkrecht oder zumindest im Wesentlichen senkrecht zu der Oberseite (101a) und der Unterseite (101c) ausgerichtet ist, und
• der Wickel (106) einen axialen Hohlraum (102) aufweist, durch den die Wickelachse (113) verläuft.

Zur Realisierung einer elektrischen Verbindung zwischen einer der Elektroden des Wickels (106) und einem der Gehäuseteile (103) wurde in dem Hohlraum (102) ein elektrisch leitender Stift (109) angeordnet.

## Beschreibung

Die nachfolgend beschriebene Erfindung betrifft ein Energiespeicherelement und ein Verfahren zur Herstellung eines Energiespeicherelements.

Unter einem Energiespeicherelement werden vorliegend eine zur Speicherung elektrischer Energie befähigte elektrochemische Zelle oder eine Batterie umfassend mehrere elektrisch miteinander verschaltete, zur Speicherung elektrischer Energie befähigte und in einem gemeinsamen Gehäuse angeordnete Energiespeicherelemente verstanden. Jede elektrochemische Zelle und damit jedes Energiespeicherelement im Sinne der vorliegenden Anmeldung umfasst mindestens eine positive und mindestens eine negative Elektrode.

In solchen Energiespeicherelementen findet eine elektrochemische, energieliefernde Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb des Energiespeicherelements. Dieser lonenstrom wird durch einen ionenleitenden Elektrolyten gewährleistet.

In sekundären (wieder aufladbaren) Energiespeicherelementen ist diese Entladereaktion reversibel, es besteht also die Möglichkeit, die bei der Entladung erfolgte Umwandlung chemischer Energie in elektrische umzukehren.

Werden im Zusammenhang mit sekundären Energiespeicherelementen die Begriffe "Anode" und "Kathode" benutzt, benennt man die Elektroden in der Regel entsprechend ihrer Entladefunktion. Die negative Elektrode in solchen Energiespeicherelementen ist also die Anode, die positive Elektrode die Kathode.

Ein bekanntes Beispiel für ein sekundäres Energiespeicherelement ist die Lithiumionen-Zelle. Diese umfasst Elektroden, die Lithiumionen reversibel aufnehmen und wieder abgeben können, sowie einen Lithiumionen enthaltenden Elektrolyten.

Lithiumionen-Zellen enthalten ihre Elektroden und Separatoren in aller Regel in Form eines Verbundkörpers. Bei einem solchen Verbundkörper kann es sich um einen Zellenstapel (stack), aus mehreren Einzelzellen handeln. Sehr häufig ist der Verbundkörper aber auch eine Einzelzelle in gewickelter Form (Wickelverbundkörper oder kurz Wickel).

In den Verbundkörpern liegen in der Regel positive und negative Elektroden sowie Separatoren flach aufeinander. Meist sind die Elektroden und Separatoren beispielsweise durch Lamination oder durch Verklebung miteinander verbunden. In der Regel umfassen Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode/ Separator / positive Elektrode hergestellt.

Die Elektroden von Lithiumionen-Zellen umfassen üblicherweise jeweils einen metallischen Stromkollektor sowie elektrochemisch aktive Komponenten (oft auch als Aktivmaterialien bezeichnet) und elektrochemisch inaktive Komponenten.

Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien oder aus einem Metallschaum oder aus einem metallisierten Vlies.

Als Aktivmaterialien kommen für sekundäre Lithiumionen-Systeme sämtliche Materialien in Frage, die Lithiumionen aufnehmen und wieder abgeben können. Stand der Technik sind diesbezüglich für die negative Elektrode sekundärer Lithiumionen-Systeme insbesondere Materialien auf Kohlenstoffbasis wie graphitischer Kohlenstoff oder zur Interkalation von Lithium befähigte nicht graphitische Kohlenstoffmaterialien. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für die positive Elektrode sekundärer Lithiumionen-Systeme kommen beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel Li-NiₓCo_{y}Al_{z}O₂ (wobei x + y + z typischerweise 1 ist). Auch Mischungen der genannten Materialien können eingesetzt werden.

Als elektrochemisch inaktive Komponenten sind an erster Stelle Elektrodenbinder und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Leitmittel wie Ruß dienen dazu, die elektrische Leitfähigkeit der Elektroden zu erhöhen.

Als Separatoren kommen für Lithiumionen-Zellen insbesondere poröse Kunststofffolien in Frage, beispielsweise aus einem Polyolefin oder aus einem Polyetherketon. Auch Vliese und Gewebe aus diesen Materialien können zum Einsatz kommen.

Als ionenleitenden Elektrolyten können Lithiumionen-Zellen beispielsweise eine Mischung organischer Carbonate, in der ein Lithiumsalz gelöst ist, enthalten. Hierfür kommt im Grunde jedes Lithiumsalz in Frage, das aus dem Stand der Technik für Lithiumionen-Zellen bekannt ist. Ein prominentes Beispiel hierfür ist Lithiumhexafluorophosphat (LiPF6).

Bevorzugt sind die Elektroden und Separatoren der Lithiumionen-Zellen mit dem Elektrolyten getränkt.

Lithiumionen-Zellen existieren in sehr kleinen Bauformen, insbesondere auch in Knopfzellenform. Knopfzellen weisen bekanntlich ein meist zylindrisches Gehäuse auf, das z.B. aus vernickeltem Stahl oder aus Blech besteht, und dessen Höhe gleich seinem Durchmesser oder kleiner als dieser ist. Das Gehäuse ist in aller Regel aus zwei metallischen Gehäuseteilen zusammengesetzt, zwischen denen eine elektrisch isolierende Dichtung angeordnet ist. Eines der Gehäuseteile steht in elektrischer Verbindung mit einer von dem Gehäuse umschlossenen positiven Elektrode und ist entsprechend positiv gepolt. Das andere steht in elektrischer Verbindung mit einer von dem Gehäuse umschlossenen negativen Elektrode und ist entsprechend negativ gepolt. Die Dichtung soll einen elektrischen Kontakt zwischen den entgegengesetzt gepolten Gehäuseteilen unterbinden. Darüber hinaus soll sie einem Entweichen und auch einem Eindringen von Flüssigkeit, Feuchtigkeit oder Gasen aus dem oder in das Gehäuse entgegenwirken.

Knopfzellen mit durch spiralförmiges Aufwickeln von bandförmigen Elektroden und mindestens einem bandförmigen Separator gefertigten Wickeln auf Lithiumionen-Basis sind beispielsweise in der WO 2010/146154 A2, in der WO 2012/048995 A1 und in der WO 2010/089152 A1 beschrieben.

Ein Problem stellt bei Knopfzellen mit solchen Wickeln stets die elektrische Kontaktierung der Elektroden dar. Die Kontaktierung wird bei den bekannten Zellen meist über eine Schweißverbindung realisiert. So können die Stromkollektoren der Elektroden unmittelbar an die Gehäuseteile eines Knopfzellengehäuses geschweißt werden, wie es beispielsweise in der DE 20 2017 006 038 U1 beschrieben ist. Alternativ können sie an elektrische Leiter geschweißt werden, die mit den Gehäuseteilen verbunden werden. Derlei elektrische Kontaktierungen sind aufgrund der kleinen Dimensionen von Knopfzellen äußerst schwer zu realisieren und in Massenfertigungsprozesse zu integrieren. Die Gehäuse von Knopfzellen weisen ausgesprochen geringe Wandstärken auf und können bei Schweißprozessen beschädigt werden. Weiterhin ist es möglich, dass der beim Schweißen unvermeidliche Hitzeeintrag Probleme verursacht, beispielsweise einen enthaltenen Wickel beschädigt.

Der vorliegenden Erfindung lag die Aufgabe zugrunde, eine hinsichtlich der genannten Probleme verbesserte Lösung zur Kontaktierung der Elektroden eines Wickels mit den Gehäuseteilen einer Knopfzelle bereitzustellen.

Zur Lösung dieser Aufgabe schlägt die Erfindung das Energiespeicherelement mit den in Anspruch 1 genannten Merkmalen sowie das Verfahren mit den Merkmalen des Anspruchs 8 vor. Weiterbildungen der Erfindung sind Gegenstand von Unteransprüchen.

Das erfindungsgemäße Energiespeicherelement zeichnet sich stets durch eine Kombination der folgenden Merkmale aus:
a. Es umfasst ein einen Innenraum einschließendes Gehäuse, das aus einem ersten metallischen Gehäuseteil und einem zweiten metallischen Gehäuseteil zusammengesetzt ist und das eine kreisförmige Oberseite und eine kreisförmige Unterseite, die voneinander beabstandet und zueinander parallel sind, sowie eine die Ober- und die Unterseite verbindende ringförmige Gehäuseseitenwand aufweist.
b. Es umfasst einen in dem Innenraum angeordneten Wickel, der eine bandförmige positive und eine bandförmige negative Elektrode und einen zwischen den Elektroden angeordneten bandförmigen Separator umfasst, die spiralförmig um eine Wickelachse gewickelt sind.
c. Der Wickel weist eine erste Stirnseite und eine zweite Stirnseite sowie eine ringförmig umlaufende Wickelaußenseite auf.
d. Die Stirnseiten weisen in Richtung der kreisförmigen und zueinander parallelen Ober- und Unterseite, so dass die Wickelachse senkrecht oder zumindest im Wesentlichen senkrecht zu der Ober- und der Unterseite ausgerichtet ist.
e. Der Wickel weist einen axialen Hohlraum auf, durch den die Wickelachse verläuft.
f. In dem Hohlraum ist ein elektrisch leitender Stift angeordnet, welcher eine der Elektroden mit einem der Gehäuseteile elektrisch verbindet.

Vom Stand der Technik zeichnet sich das Energiespeicherelement durch das vorstehenden Merkmal f., also den elektrisch leitenden Stift, aus. Eine elektrische Verbindung über einen solchen Stift im Hohlraum eines Wickels ist vollkommen neu. Aus der erwähnten WO 2010/089152 A1 sind zwar Knopfzellen mit Wickeln bekannt, die einen metallischen Wickelkern umfassen. Es ist aber nicht bekannt, diesen Wickelkern zur elektrischen Kontaktierung einer Elektrode zu verwenden.

Die beiden metallischen Gehäuseteile sind bevorzugt elektrisch voneinander isoliert, beispielsweise durch eine ringförmige Kunststoffdichtung, die zwischen den beiden Gehäuseteilen angeordnet wird. So können die beiden Gehäuseteile, wenn sie mit den Elektroden elektrisch verbunden sind, als Pole des Energiespeicherelements dienen.

Die Gehäuseteile können beispielsweise aus vernickeltem Stahl oder aus Blech bestehen. Weiterhin kommt als metallischer Werkstoff auch Trimetall in Frage, beispielsweise mit der Abfolge Nickel, Stahl (oder Edelstahl) und Kupfer. Es ist auch denkbar, dass eines der Gehäuseteile aus Aluminium oder einer Aluminiumlegierung gebildet ist während das andere Gehäuseteil aus Stahl oder aus Trimetall besteht.

Der Wickel des Energiespeicherelements muss sich nicht von den eingangs erwähnten, aus dem Stand der Technik bekannten Wickeln unterscheiden. Besonders bevorzugt sind seine Elektroden dazu ausgebildet, Lithiumionen reversibel ein- und auslagern zu können. Mit anderen Worten, bei dem erfindungsgemäßen Energiespeicherelement handelt es sich bevorzugt um eine Lithium-Ionen-Zelle. Die Elektroden weisen in diesem Fall bevorzugt eines der oben erwähnten Aktivmaterialien für die Elektroden von Lithiumionen-Zellen auf und sind bevorzugt mit dem erwähnten Elektrolyten getränkt. Der Separator kann beispielsweise die oben genannte poröse Kunststofffolie sein.

In besonders bevorzugten Ausführungsformen weist der Wickel eine zylindrische oder hohlzylindrische Geometrie wie etwa die in den Figuren 3a und 3b der WO 2010/146154 A2 dargestellten Wickel auf. Die erste und die zweite Stirnseite werden insbesondere in diesen Ausführungsformen bevorzugt durch zwei kreisförmig umlaufende Kanten zu der ringförmig umlaufenden Wickelaußenseite hin begrenzt.

In bevorzugten Ausführungsformen sind die Stirnseiten eben ausgebildet. In einigen Ausführungsformen kann zumindest eine der Stirnseiten aber auch eine Wölbung aufweisen, die sich ausgehend von den kreisförmig umlaufenden Kanten in Richtung des Zentrums der Stirnseite erhebt, wie das beispielsweise in Fig. 8 der EP 3 176 848 A1 dargestellt ist.

Zur Herstellung des Wickels können die Elektroden und der Separator beispielsweise auf einen Wickeldorn oder auf einen Wickelkern aufgewickelt werden. Der axiale Hohlraum resultiert beispielsweise aus dem Abziehen des Wickels von dem Wickeldorn.

Zwischen den Stirnseiten des Wickels und dem Gehäuse kann in bevorzugten Ausführungsformen mindestens ein elektrischer Isolator, beispielsweise in Form von an die Innenseite des Gehäuses geklebten Kunststofffolien oder in Form einer dünnen Kunststoffscheibe, angeordnet sein. Ein solcher Isolator schützt das Gehäuse auch vor unmittelbarem Kontakt mit dem Elektrolyten und dadurch eine vor elektrolytbedingter Korrosion.

Bevorzugt zeichnet sich das Energiespeicherelement durch mindestens eines der unmittelbar folgenden zusätzlichen Merkmale a. bis f. aus:
a. Der Stift weist ein erstes Ende, das an eine Innenseite des über den Stift mit der einen der Elektrode verbundenen Gehäuseteils fixiert ist, und ein zweites, freies Ende auf.
b. Das freie Ende ist als Konus ausgebildet.
c. Zwischen den beiden Enden umfasst der Stift einen Schaft.
d. Der Stift besteht aus einem Metall.
e. Der Stift ist hohl oder massiv ausgebildet.
f. Der Stift weist eine Länge auf, die den kürzesten Abstand zwischen den Stirnseiten des Wickels unterschreitet.

Bevorzugt sind die unmittelbar vorstehenden Merkmale a., c., d., e. und f., besonders bevorzugt die unmittelbar vorstehenden Merkmale a. bis f., in Kombination miteinander realisiert.

Grundsätzlich ist es nicht erfindungswesentlich, wie der Stift an das Gehäuseteil fixiert ist, wichtig ist hingegen, dass zu dem Gehäuseteil eine elektrisch leitende Verbindung besteht. Bevorzugt ist der Stift an das Gehäuseteil angeschweißt.

Der Konus dient bevorzugt dazu, das Einführen des Stiftes beispielsweise in den Hohlraum zu erleichtern. Der Durchmesser des Konus verringert sich in Richtung seiner Spitze. Der Schaft verbindet die Enden des Stiftes, er weist bevorzugt zumindest in einem Abschnitt, bevorzugt über seine gesamte Länge, einen konstanten Durchmesser auf.

Wenn der Stift elektrisch mit der positiven Elektrode verbunden ist, so besteht er bevorzugt aus Aluminium oder aus einer Aluminiumlegierung oder einem Edelstahl. Auch das mit dem Stift elektrisch verbundene Gehäuseteil kann in diesem Fall aus Aluminium oder einer Aluminiumlegierung oder aus Edelstahl bestehen. Wenn der Stift elektrisch mit der negativen Elektrode verbunden ist, so besteht er bevorzugt aus Kupfer oder aus einer Kupferlegierung oder Nickel oder einer Nickellegierung oder einem Edelstahl.

Dadurch, dass die Länge des Stiftes den kürzesten Abstand zwischen den Stirnseiten des Wickels unterschreitet, ist gewährleistet, dass der Stift keinen Kurzschluss zwischen dem ersten und dem zweiten Gehäuseteil verursacht.

Bevorzugt beträgt die Länge des Stiftes 10 bis 90 % des kürzesten Abstands zwischen den Stirnseiten des Wickels, weiter bevorzugt von 20 bis 80 %, insbesondere von 30 bis 70 % des kürzesten Abstands zwischen den Stirnseiten des Wickels.

Bevorzugt zeichnet sich das Energiespeicherelement durch mindestens eines der unmittelbar folgenden zusätzlichen Merkmale a. und b. aus:
a. Die positive und/oder die negative Elektrode weisen jeweils einen bandförmigen Stromkollektor auf, der zumindest bereichsweise mit Elektrodenmaterial bedeckt ist.
b. Die erste und/oder die zweite Elektrode sind in Längsrichtung in mindestens zwei Abschnitte unterteilt und verfügen über einen Aktivmaterialabschnitt, in dem der Stromkollektor mit Elektrodenmaterial bedeckt ist, und einen endständigen Kontaktabschnitt, in dem der Stromkollektor nicht mit Elektrodenmaterial bedeckt ist.

Besonders bevorzugt sind die unmittelbar vorstehenden Merkmale a. und b. in Kombination miteinander realisiert.

Bei den Stromkollektoren handelt es sich bevorzugt um bandförmige Folien, Netze, Gitter, Schäume, Vliese oder sonstige textile Gebilde aus einem Metall oder einer Metalllegierung.

Die Unterteilung der bandförmigen Stromkollektoren in Längsrichtung in die mindestens zwei Abschnitte ist bevorzugt Ergebnis eines intermittierenden Auftrags von Elektrodenmaterial auf den jeweiligen Stromkollektor oder die Stromkollektoren.

Der Kontaktabschnitt dient in bevorzugten Ausführungsformen dazu, die jeweilige Elektrode unmittelbar mit dem Stift zu verbinden. Alternativ kann der Kontaktabschnitt auch mit einem separaten Leiter verbunden sein, beispielsweise durch Verschweißung, der seinerseits in elektrischem Kontakt mit dem Stift steht.

Der bandförmige Stromkollektor der positiven Elektrode besteht, wenn es sich bei dem erfindungsgemäßen Energiespeicherelement um eine Lithium-Ionen-Zelle handelt, bevorzugt aus Aluminium oder aus einer Aluminiumlegierung. Der bandförmige Stromkollektor der negativen Elektrode besteht, wenn es sich bei dem erfindungsgemäßen Energiespeicherelement um eine Lithium-Ionen-Zelle handelt, bevorzugt aus Nickel oder Kupfer oder aus einer Legierung eines dieser Metalle.

In besonders bevorzugten Ausführungsformen umfassen sowohl der Stromkollektor der positiven als auch der Stromkollektor der negativen Elektrode jeweils zwei endständige, nicht mit Elektrodenmaterial bedeckte Kontaktabschnitte, zwischen denen jeweils ein mit Elektrodenmaterial bedeckter Aktivmaterialabschnitt angeordnet ist.

Es gibt zwei besonders bevorzugte Varianten A und B, wie der Stift eine der Elektroden elektrisch kontaktiert:
Gemäß Variante A zeichnet sich das Energiespeicherelement durch mindestens eines der unmittelbar folgenden zusätzlichen Merkmale a. und b. aus:
a. Der endständige Kontaktabschnitt begrenzt den axialen Hohlraum, insbesondere bildet er eine Wandung oder die Wandung des axialen Hohlraums.
b. Der Stift steht mit dem den axialen Hohlraum begrenzenden endständigen Kontaktabschnitt in unmittelbarem Kontakt.

Besonders bevorzugt sind die unmittelbar vorstehenden Merkmale a. und b. in Kombination miteinander realisiert.

Der Stift ist bei dieser Variante bevorzugt lösbar mit dem Kontaktabschnitt verbunden, so dass der Stift aus dem den axialen Hohlraum herausgezogen werden kann.

Gemäß Variante B zeichnet sich das Energiespeicherelement durch mindestens eines der unmittelbar folgenden zusätzlichen Merkmale a. bis d. aus:
a. In dem Hohlraum ist eine elektrisch leitend ausgebildete Hülse angeordnet.
b. Die Hülse steht mit der positiven oder der negativen Elektrode in elektrischem Kontakt, in bevorzugten Ausführungsformen in unmittelbarem Kontakt.
c. Der Stift steht mit der Hülse in unmittelbarem Kontakt.
d. Der Stift ist zumindest teilweise in die Hülse eingeschoben.
e. Der Stift liegt zumindest bereichsweise an einer inneren Oberfläche des Innenraums der Hülse an.

Besonders bevorzugt sind die unmittelbar vorstehenden Merkmale a. bis d. in Kombination miteinander realisiert.

Der Stift ist bei dieser Variante bevorzugt lösbar mit der Hülse verbunden, so dass der Stift aus der Hülse herausgezogen werden kann. Bei der Hülse kann es sich wiederum um den erwähnten separaten Leiter handeln, der mit dem Kontaktabschnitt einer der Elektroden elektrisch verbunden ist. Bevorzugt sind die Hülse und der Kontaktabschnitt miteinander durch Verschweißung verbunden.

Es ist weiterhin bevorzugt, dass sich das Energiespeicherelement durch mindestens eines der unmittelbarfolgenden zusätzlichen Merkmale a. und b. auszeichnet:
a. Das erste und das zweite Gehäuseteil sind beide becherförmig ausgebildet und weisen jeweils einen kreisförmigen Boden und eine ringförmige Seitenwand auf.
b. Das erste und das zweite Gehäuseteil sind durch eine ringförmige Dichtung mit elektrisch isolierenden Eigenschaften elektrisch voneinander getrennt.
c. Der Boden und die ringförmige Seitenwand der becherförmigen Gehäuseteile sind jeweils durch einen Übergangsbereich miteinanderverbunden.
d. Die ringförmigen Seitenwände werden jeweils zum einen durch die Übergangsbereiche und zum anderen durch eine umlaufende freie Kante, die eine kreisförmige Öffnung definiert, begrenzt.
e. Eines der Gehäuseteile ist mit der umlaufenden freien Kante voran in das andere Gehäuseteil eingeschoben, so dass die Seitenwände der Gehäuseteile überlappen und einen doppelwandigen, ringförmigen Gehäusebereich bilden.

Besonders bevorzugt sind die unmittelbar vorstehenden Merkmale a. bis e. in Kombination miteinander realisiert.

Bei dieser Ausführungsform ist das erste Ende des Stifts bevorzugt an eine Innenseite eines der kreisförmigen Böden der Gehäuseteile fixiert. Bevorzugt ist der Stift im Zentrum der kreisförmigen Böden fixiert. Bevorzugt schließen der Stift und der jeweilige Gehäuseboden, an dem der Stift fixiert ist, einen Winkel von 90° (± 5°) ein.

Die Übergangsbereiche umfassen bevorzugt die Bereiche der Gehäuseteile, die außerhalb der Ebene des jeweiligen Bodens liegen, jedoch noch nicht Teil der dazugehörigen Seitenwand sind. Die Übergangsbereiche können abgerundet ausgebildet sein, beispielsweise schulterförmig, oder auch die Form einer scharfen Kante haben.

Die ringförmigen Seitenwände der Gehäuseteile weisen in bevorzugten Ausführungsformen eine zylindrische Geometrie auf. Besonders bevorzugt können die Seitenwände mit den Böden jeweils einen Winkel von 90° einschließen.

Bei der Montage des Gehäuses wird das erste Gehäuseteil bevorzugt mit der freien Kante seiner Seitenwand voran in das zweite Gehäuseteil eingeschoben, so dass die ringförmige Seitenwand des ersten Gehäuseteils und die ringförmige Seitenwand des zweiten Gehäuseteils mindestens bereichsweise überlappen und einen umlaufenden, doppelwandigen Mantel bilden und die Böden des ersten und des zweiten Gehäuseteils parallel zueinander ausgerichtet sind. Alternativ kann auch das zweite Gehäuseteil mit der freien Kante seiner Seitenwand voran in das erste Gehäuseteil eingeschoben werden, so dass die ringförmige Seitenwand des ersten Gehäuseteils und die ringförmige Seitenwand des zweiten Gehäuseteils mindestens bereichsweise überlappen und einen umlaufenden, doppelwandigen Mantel bilden und die Böden des ersten und des zweiten Gehäuseteils parallel zueinander ausgerichtet sind.

Nach der Montage bilden die Außenseiten der Böden der Gehäuseteile die kreisförmige Oberseite und die kreisförmige Unterseite des Gehäuses. Die bereichsweise überlappenden Seitenwände der Gehäuseteile bilden die die Ober- und die Unterseite verbindende ringförmige Gehäuseseitenwand.

Die Dimensionen des ersten und des zweiten Gehäuseteils müssen entsprechend aneinander angepasst werden. Das Gehäuseteil, das in das andere eingeschoben werden soll, weist gewöhnlich eine ringförmige Seitenwand mit einem kleineren Durchmesser als die Seitenwand des anderen Gehäuseteils auf. Auf die Seitenwand mit dem kleineren Durchmesser wird meist auch die ringförmige Dichtung aufgeschoben bevor die Gehäuseteile zusammengefügt werden. Weiterhin wird der Verbundkörper meist in dem Gehäuseteil mit dem kleineren Mantel positioniert, bevor die Gehäuseteile zusammengefügt werden.

Die ringförmige Dichtung besteht bevorzugt aus einem Kunststoff mit elektrisch isolierenden Eigenschaften, beispielsweise aus einem Polyamid. Sie hat zum einen die Aufgabe, die Gehäuseteile elektrisch gegeneinander zu isolieren. Darüber hinaus soll die Dichtung einen flüssigkeitsdichten Verschluss des Gehäuses gewährleisten.

Zum Verschluss des Gehäuses kann in einigen Ausführungsformen die freie umlaufende Kante des größeren Gehäuseteils nach innen umgebogen werden (Verschluss durch Bördelung). Grundsätzlich ist aber auch ein bördelfreier Verschluss möglich, wie das etwa in Figur 1 der WO 2010/146154 A2 dargestellt ist.

Besonders bevorzugt handelt es sich bei dem erfindungsgemäßen Energiespeicherelement um eine Knopfzelle, bevorzugt mit einem Gehäuse mit einem Durchmesser im Bereich von 5 mm bis 25 mm. Die Höhe des Gehäuses (Abstand der Ober- und der Unterseite) überschreitet bei einer Knopfzelle nicht dessen Durchmesser. Der Stift weist in diesem Fall bevorzugt eine Länge im Bereich von 2 mm bis 20 mm sowie einen Durchmesser im Bereich von 0,5 mm bis 3 mm auf.

In einer weiteren bevorzugten Ausführungsform handelt es sich bei dem erfindungsgemäßen Energiespeicherelement um eine zylindrische Rundzelle, bevorzugt mit einem Gehäuse mit einem Durchmesser im Bereich von 5 mm bis 25 mm. Die Höhe des Gehäuses der Rundzelle (Abstand der Ober- und der Unterseite) überschreitet dessen Durchmesser bevorzugt um den Faktor 1,1 bis 10, insbesondere um den Faktor 1,5 bis 5. Der Stift weist auch in diesem Fall bevorzugt eine Länge im Bereich von 2 mm bis 20 mm sowie einen Durchmesser im Bereich von 0,5 mm bis 3 mm auf.

Es ist weiterhin bevorzugt, dass sich das Energiespeicherelement durch mindestens eines der unmittelbarfolgenden zusätzlichen Merkmale a. und b. auszeichnet:
a. Das erste und das zweite Gehäuseteil sind derart ausgebildet, dass sie entlang einer senkrecht durch die kreisförmigen Böden der Gehäuseteile führenden Achse gegeneinander verschiebbar sind.
b. Die Länge des Stiftes ist derart bemessen, dass der Stift, wenn sich die Gehäuseteile entlang der Achse voneinander weg bewegen, den Kontakt zu dem den axialen Hohlraum begrenzenden endständigen Kontaktabschnitt oder zu der in dem Hohlraum angeordneten Hülse verlieren kann.

Besonders bevorzugt sind die unmittelbar vorstehenden Merkmale a. und b. in Kombination miteinander realisiert.

Zellen mit derart ausgebildeten Gehäuseteilen sind aus der WO 2012/048995 A1 bekannt. Sie zeichnen sich dadurch aus, dass ihre Gehäuse gegeneinander verschiebbar sind, so dass die Gehäuseteile in einem definierten Umfang auseinander gleiten können, wenn ein Druck im Innenraum des Gehäuses einen Schwellenwert überschreitet. Das hinter diesem Design stehende Sicherheitskonzept ist anhand von Fig. 3A der WO 2012/048995 A1 nachzuvollziehen. Zum einen werden in Folge des Auseinandergleitens Durchbrechungen im Gehäuse freigelegt, über die ein Überdruck abgebaut werden kann. Zum anderen können Stromableiter an Solltrennstellen durchtrennt werden.

Dieses Sicherheitskonzept lässt sich besonders gut auf die vorliegende Erfindung übertragen. Bei einer Ausführungsform eines Energiespeicherelements gemäß der vorliegenden Erfindung, das ein Gehäuse aufweist, wie es in der WO 2012/048995 A1 beschrieben ist, kann bei entsprechender Dimensionierung des Stifts und des den axialen Hohlraum begrenzenden endständigen Kontaktabschnitts oder der in dem Hohlraum angeordneten Hülse bei einem Auseinandergleiten der Gehäuseteile eine elektrische Dekontaktierung zwischen Stift und Hülse erfolgen.

Das erfindungsgemäße Verfahren dient zur Herstellung des oben beschriebenen Energiespeicherelements mit dem beschriebenen Gehäuse und dem beschriebenen Wickel. Es zeichnet sich dadurch aus, dass zur elektrischen Kontaktierung eines der zwei metallischen Gehäuseteile mit einer der Elektroden des herzustellenden Energiespeicherelements ein elektrisch leitender Stift im axialen Hohlraum des Wickels angeordnet wird.

Es gibt drei besonders bevorzugte Ausführungsformen des Verfahrens. In einer ersten besonders bevorzugten Ausführungsform umfasst das Verfahren die unmittelbar folgenden zusätzlichen Schritte a. bis c.:
a. Bereitstellung eines der zwei Gehäuseteile, bei dem der Stift an eine Innenseite fixiert ist.
b. Bereitstellung des anderen der zwei Gehäuseteile, in das der Wickel eingeschoben ist.
c. Zusammensetzen der Gehäuseteile zu dem Gehäuse, wobei der Stift in den axialen Hohlraum des Wickels eingeführt wird.

Bei dieser Ausführungsform wird der Wickel also in eines der zwei Gehäuseteile eingeschoben. Vor oder nach dem Einlegen wird eine der Elektroden des Wickels mit diesem Gehäuseteil elektrisch verbunden, beispielsweise durch Verschweißung eines Stromkollektors mit diesem Gehäuseteil. Bei Zusammensetzen erfolgt dann das elektrische Kontaktieren der anderen Elektrode des Wickels mit dem anderen Gehäuseteil, nämlich wenn der Stift beim Einführen in den Hohlraum in Kontakt beispielsweise mit dem den axialen Hohlraum begrenzenden endständigen Kontaktabschnitt oder mit einer in dem Hohlraum angeordneten Hülse tritt.

In einer zweiten besonders bevorzugten Ausführungsform umfasst das Verfahren die unmittelbar folgenden zusätzlichen Schritte a. bis c.:
a. Bereitstellung eines der zwei Gehäuseteile, bei dem der Stift an eine Innenseite fixiert ist.
b. Der Wickel wird in dieses Gehäuseteil eingeschoben, wobei der Stift in den axialen Hohlraum des Wickels eingeführt wird.
c. Zusammensetzen der Gehäuseteile zu dem Gehäuse.

Bei dieser Ausführungsform wird der Wickel also in das Gehäuseteil mit dem Stift eingeschoben, wobei eine der Elektroden des Wickels mit diesem Gehäuseteil elektrisch verbunden wird, nämlich wenn der Stift beim Einführen in den Hohlraum in Kontakt beispielsweise mit dem den axialen Hohlraum begrenzenden endständigen Kontaktabschnitt oder mit einer in dem Hohlraum angeordneten Hülse tritt. Danach erfolgt das Zusammensetzen des Gehäuseteils mit dem eingeschobenen Wickel mit dem zweiten Gehäuseteil zu dem Gehäuse.

In einer dritten besonders bevorzugten Ausführungsform umfasst das Verfahren die unmittelbar folgenden zusätzlichen Schritte a. und b.:
a. Bereitstellung des Wickels mit dem Stift, der in dem axialen Hohlraum des Wickels angeordnet ist.
b. Beim Einlegen des Wickels in eines der Gehäuseteile wird der Stift mit diesem Gehäuseteil elektrisch verbunden oder beim Zusammensetzen der Gehäuseteile zu dem Gehäuse wird der Stift mit einem der Gehäuseteile elektrisch verbunden.

Bei dieser Ausführungsform wird der Stift also zuerst im Wickel angeordnet und bei der Gehäusemontage mit einem der Gehäuseteile verbunden.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen schematisch und nicht zwingend maßstabsgetreu
- Figur 1 eine Ausführungsform eines erfindungsgemäßen Energiespeicherelements gemäß obiger Variante A in einer Querschnittsansicht,
- Figur 2 eine Ausführungsform eines erfindungsgemäßen Energiespeicherelements gemäß obiger Variante B in einer Querschnittsansicht, und
- Figur 3 eine weitere Ausführungsform eines erfindungsgemäßen Energiespeicherelements gemäß obiger Variante B in einer Querschnittsansicht.

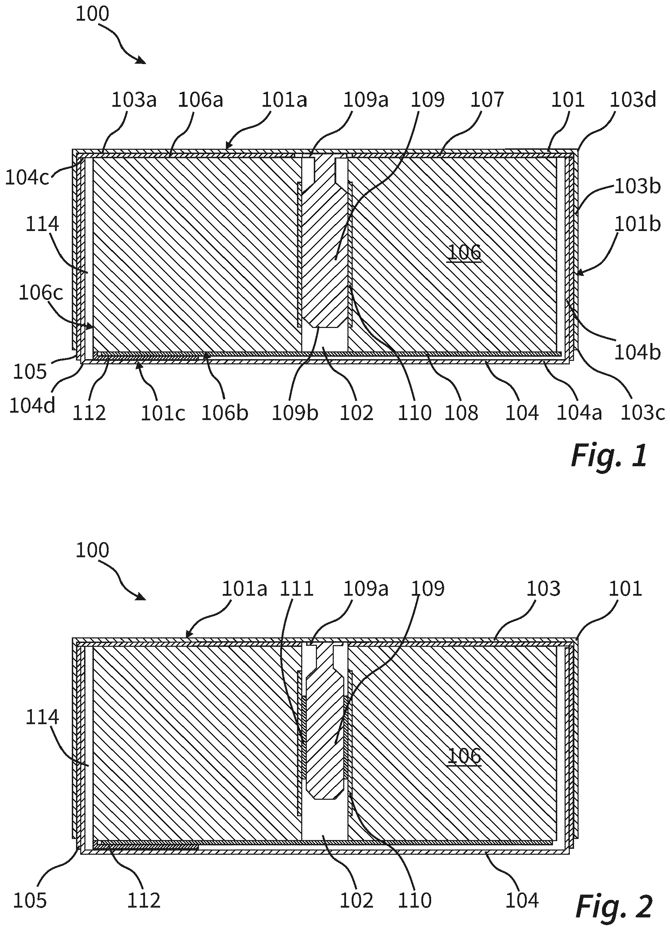

Bei dem in Fig. 1 dargestellten Energiespeicherelement 100 handelt es sich um eine Knopfzelle. Diese umfasst ein einen Innenraum 114 einschließendes Gehäuse 101, das aus einem ersten metallischen Gehäuseteil 103 und einem zweiten metallischen Gehäuseteil 104 zusammengesetzt ist und das eine kreisförmige Oberseite 101a und eine kreisförmige Unterseite 101c, die voneinander beabstandet und zueinander parallel sind, sowie eine die Oberseite 101a und die Unterseite 101c verbindende ringförmige Gehäuseseitenwand 101b aufweist. Das erste und das zweite Gehäuseteil (103, 104) sind beide becherförmig ausgebildet und weisen jeweils einen kreisförmigen Boden (103a, 104a) und eine ringförmige Seitenwand (103b, 104b) auf. Der Boden (103, 104a) und die ringförmige Seitenwand (103b, 104b) der becherförmigen Gehäuseteile (103, 104) sind jeweils durch einen als Kante ausgebildeten Übergangsbereich (103d, 104d) miteinander verbunden. Die ringförmigen Seitenwände (103b, 104b) werden jeweils zum einen durch die Übergangsbereiche und zum anderen durch eine umlaufende freie Kante (103c, 104c), die eine kreisförmige Öffnung definiert, begrenzt.

Zwischen den Gehäuseteilen 103 und 104 ist eine ringförmige, elektrisch isolierende Dichtung 105 angeordnet.

In dem Innenraum 114 ist ein Wickel 106 angeordnet, der eine bandförmige positive und eine bandförmige negative Elektrode und einen zwischen den Elektroden angeordneten bandförmigen Separator umfasst, die spiralförmig um eine Wickelachse 113 gewickelt sind.

Der Wickel 106 weist eine erste Stirnseite 106a und eine zweite Stirnseite 106b sowie eine ringförmig umlaufende Wickelaußenseite 106c auf Weiterhin umschließt er den axialen Hohlraum 102, durch den die Wickelachse 113 verläuft. Die Stirnseiten 106a und 106b des Wickels weisen in Richtung der kreisförmigen und zueinander parallelen Oberseite 101a und Unterseite 101c, so dass die Wickelachse 113 senkrecht oder zumindest im Wesentlichen senkrecht zu der Oberseite 101a und der Unterseite 101c ausgerichtet ist. Durch Isolatoren in Form von Isolierscheiben 107 und 108 werden die Stirnseiten 106a und 106b gegen die Gehäuseteile 103 und 104 elektrisch isoliert. Diese Isolierscheiben 107 und 108 müssen nicht zwingend vorhanden sein, insbesondere bei Ausführungsformen, bei denen zum Beispiel an den Stirnseiten 106a und 106b des Wickels 106 ein Separator übersteht und so einen Kontakt der Elektroden mit dem Gehäuse unterbindet.

In dem Hohlraum 102 ist ein elektrisch leitender Stift 109 angeordnet, welcher eine der Elektroden des Wickels 106 mit dem Gehäuseteil 103 elektrisch verbindet. Bei diesem Stift 109 handelt es sich um einen massiven Metallstift, der mit seinem ersten Ende 109a an eine Innenseite des Gehäuseteils 103 fixiert ist. Mit dem zweiten, freien Ende 109b voran ist der Stift 109 in den Hohlraum 102 des Wickels 106 eingeschoben. Die Wandung des Hohlraums 102 wird teilweise von einem endständigen Kontaktabschnitt 110 eines Stromkollektors der mit Gehäuseteil 103 elektrisch verbundenen Elektrode gebildet. Der Stift 109 liegt unmittelbar an dieser Wandung an und ist daher elektrisch mit dem Kontaktabschnitt 110 verbunden. Eine weitere Elektrode des Wickels 106 ist über den elektrischen Leiter 112 mit dem Gehäuseteil 104 verbunden.

Bei dem in Fig. 2 dargestellten Energiespeicherelement 100 handelt es sich ebenfalls um eine Knopfzelle. Von der in Fig. 1 dargestellten Knopfzelle unterscheidet sich diese darin, dass eine Hülse 111 in dem Hohlraum 102 angeordnet ist. Die Hülse 111 ist mit dem Kontaktabschnitt 110 durch Verschweißung verbunden. Der Stift 109 ist in die Hülse 111 eingeschoben und steht mit dieser in unmittelbarem Kontakt.

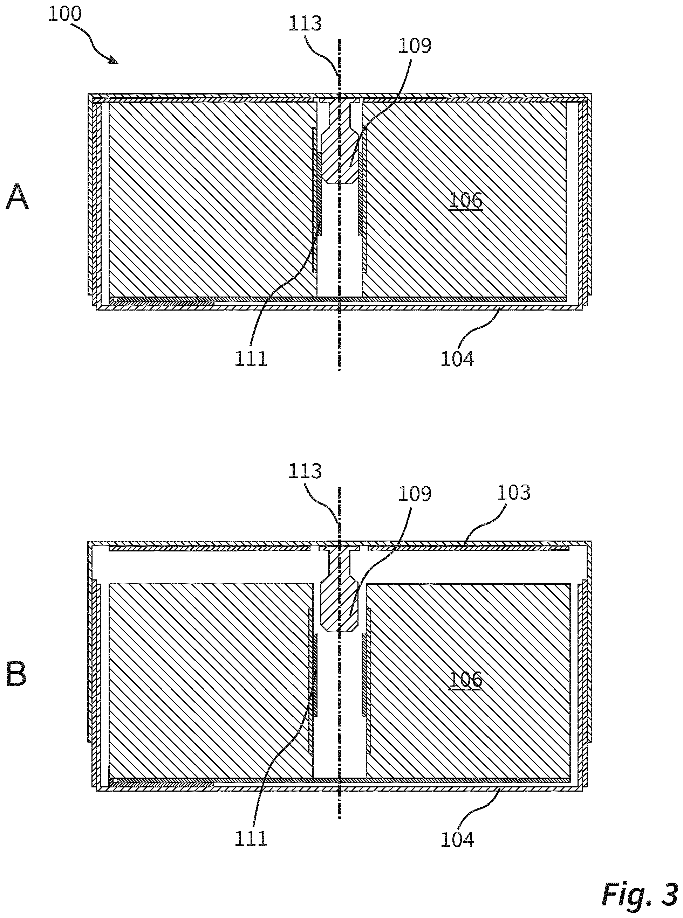

Dass dieser Kontakt lösbar ist, ergibt sich aus Figur 3. Das Gehäuse des in Figur 3 dargestellten Energiespeicherelements 100 in Form einer Knopfzelle ist, im Übrigen wie auch die Gehäuse der in Figur 1 und Figur 2 dargestellten Knopfzellen, bördelfrei verschlossen. Das erste und das zweite Gehäuseteil 103 und 104 sind derart ausgebildet, dass sie entlang der Wickelachse 113 gegeneinander verschiebbar sind. Die Länge des Stiftes 109 ist dabei derart bemessen, dass der Stift 109, wenn sich die Gehäuseteile 103 und 104 entlang der Wickelachse 113 voneinander weg bewegen, den Kontakt zu der in dem Hohlraum 102 angeordneten Hülse 111 verliert.

## Patentansprüche

1. Energiespeicherelement (100) mit den Merkmalen:
a. es umfasst ein einen Innenraum (114) einschließendes Gehäuse (101), das aus einem ersten metallischen Gehäuseteil (103) und einem zweiten metallischen Gehäuseteil (104) zusammengesetzt ist und das eine kreisförmige Oberseite (101a) und eine kreisförmige Unterseite (101c), die voneinander beabstandet und zueinander parallel sind, sowie eine die Oberseite (101a) und die Unterseite (101c) verbindende ringförmige Gehäuseseitenwand (101b) aufweist,
b. es umfasst einen in dem Innenraum (114) angeordneten Wickel (106), der eine bandförmige positive und eine bandförmige negative Elektrode und einen zwischen den Elektroden angeordneten bandförmigen Separator umfasst, die spiralförmig um eine Wickelachse (113) gewickelt sind,
c. der Wickel (106) weist eine erste Stirnseite (106a) und eine zweite Stirnseite (106b) sowie eine ringförmig umlaufende Wickelaußenseite (106c) auf,
d. die Stirnseiten (106a, 106b) weisen in Richtung der kreisförmigen und zueinander parallelen Oberseite (101a) und Unterseite (101c), so dass die Wickelachse (113) senkrecht oder zumindest im Wesentlichen senkrecht zu der Oberseite (101a) und der Unterseite (101c) ausgerichtet ist,
e. der Wickel (106) weist einen axialen Hohlraum (102) auf, durch den die Wickelachse (113) verläuft,
sowie dem zusätzlichen Merkmal
f. in dem Hohlraum (102) ist ein elektrisch leitender Stift (109) angeordnet, welcher eine der Elektroden des Wickels (106) mit einem der Gehäuseteile (103) elektrisch verbindet.

2. Energiespeicherelement (100) nach Anspruch 1 mit mindestens einem der folgenden zusätzlichen Merkmale:
a. der Stift (109) weist ein erstes Ende (109a), das an eine Innenseite des über den Stift (109) mit der einen der Elektrode verbundenen Gehäuseteils (103) fixiert ist, und ein zweites, freies Ende (109b) auf.
b. Das freie Ende ist als Konus ausgebildet.
c. Zwischen den beiden Enden (109a, 109b) umfasst der Stift einen Schaft.
d. Der Stift (109) besteht aus einem Metall.
e. Der Stift (109) ist hohl oder massiv ausgebildet.
f. Der Stift (109) weist eine Länge auf, die den kürzesten Abstand zwischen den Stirnseiten (106a, 106b) des Wickels (106) unterschreitet.

3. Energiespeicherelement (100) nach einem der der vorherigen Ansprüche mit den folgenden weiteren Merkmalen:
a. Die positive und/oder die negative Elektrode weisen einen bandförmigen Stromkollektor auf, der zumindest bereichsweise mit Elektrodenmaterial bedeckt ist.
b. Die positive und/oder die negative Elektrode sind in Längsrichtung in mindestens zwei Abschnitte unterteilt und verfügen über einen Aktivmaterialabschnitt, in dem der Stromkollektor mit Elektrodenmaterial bedeckt ist, und einen endständigen Kontaktabschnitt (110), in dem der Stromkollektor nicht mit Elektrodenmaterial bedeckt ist.

4. Energiespeicherelement (100) nach Anspruch 3 mit den folgenden weiteren Merkmalen:
a. Der endständige Kontaktabschnitt (110) begrenzt den axialen Hohlraum (102), insbesondere bildet er eine Wandung oder die Wandung des axialen Hohlraums (102).
b. Der Stift (109) steht mit dem den axialen Hohlraum (102) begrenzenden endständigen Kontaktabschnitt (110) in unmittelbarem Kontakt.

5. Energiespeicherelement (100) nach einem der der vorherigen Ansprüche mit mindestens einem der folgenden weiteren Merkmale:
a. In dem Hohlraum (102) ist eine elektrisch leitend ausgebildete Hülse (111) angeordnet.
b. Die Hülse (111) steht mit der positiven oder der negativen Elektrode elektrisch in Kontakt.
c. Der Stift (109) steht mit der Hülse (111) in unmittelbarem Kontakt.
d. Der Stift (109) ist zumindest teilweise in die Hülse (111) eingeschoben.

6. Energiespeicherelement (100) nach einem der der vorherigen Ansprüche mit den folgenden weiteren Merkmalen:
a. Das erste und das zweite Gehäuseteil (103, 104) sind beide becherförmig ausgebildet und weisen jeweils einen kreisförmigen Boden (103a, 104a) und eine ringförmige Seitenwand (103b, 104b) auf.
b. Das erste und das zweite Gehäuseteil (103, 104) sind durch eine ringförmige Dichtung (105) mit elektrisch isolierenden Eigenschaften elektrisch voneinander getrennt.
c. Der Boden (103, 104a) und die ringförmige Seitenwand (103b, 104b) der becherförmigen Gehäuseteile (103, 104) sind jeweils durch einen Übergangsbereich miteinander verbunden.
d. Die ringförmigen Seitenwände (103b, 104b) werden jeweils zum einen durch die Übergangsbereiche und zum anderen durch eine umlaufende freie Kante (103c, 104c), die eine kreisförmige Öffnung definiert, begrenzt.
e. Eines der Gehäuseteile (104) ist mit der umlaufenden freien Kante (104c) voran in das andere Gehäuseteil (103) eingeschoben, so dass die Seitenwände (103b, 104b) der Gehäuseteile (103, 104) überlappen und einen doppelwandigen, ringförmigen Gehäusebereich bilden.

7. Energiespeicherelement (100) nach Anspruch 6 mit mindestens einem der folgenden weiteren Merkmale:
a. Das erste und das zweite Gehäuseteil (103, 104) sind derart ausgebildet, dass sie entlang einer senkrecht durch die kreisförmigen Böden (103a, 104a) der Gehäuseteile (103, 104) führenden Achse (113) gegeneinander verschiebbar sind.
b. Die Länge des Stiftes (109) ist derart bemessen, dass der Stift (109), wenn sich die Gehäuseteile (103, 104) entlang der Achse (113) voneinander weg bewegen, den Kontakt zu dem den axialen Hohlraum (102) begrenzenden endständigen Kontaktabschnitt (110) oder zu der in dem Hohlraum (102) angeordneten Hülse (111) verlieren kann.

8. Verfahren zur Herstellung eines Energiespeicherelements (100) mit
a. einem einen Innenraum (114) einschließenden Gehäuse (101), das aus einem ersten metallischen Gehäuseteil (103) und einem zweiten metallischen Gehäuseteil (104) zusammengesetzt ist und das eine kreisförmige Oberseite (101a) und eine kreisförmige Unterseite (101c), die voneinander beabstandet und zueinander parallel sind, sowie eine die Oberseite (101a) und die Unterseite (101c) verbindende ringförmige Gehäuseseitenwand (101b) aufweist,
b. einem in dem Innenraum (114) angeordneten Wickel (106), der eine bandförmige positive und eine bandförmige negative Elektrode und einen zwischen den Elektroden angeordneten bandförmigen Separator umfasst, die spiralförmig um eine Wickelachse (113) gewickelt sind, wobei
c. der Wickel (106) eine erste Stirnseite (106a) und eine zweite Stirnseite (106b) sowie eine ringförmig umlaufende Wickelaußenseite (106c) aufweist, und
d. die Stirnseiten (106a, 106b) in Richtung der kreisförmigen und zueinander parallelen Oberseite (101a) und Unterseite (101c) weisen, so dass die Wickelachse (113) senkrecht oder zumindest im Wesentlichen senkrecht zu der Ober- und der Unterseite (101a, 101c) ausgerichtet ist, und
e. der Wickel (106) einen axialen Hohlraum (102) aufweist, durch den die Wickelachse (113) verläuft,
wobei das Verfahren den folgenden Schritt umfasst:
f. Zur elektrischen Kontaktierung eines der metallischen Gehäuseteile (103) mit einer der Elektroden wird ein elektrisch leitender Stift (109) in dem Hohlraum (102) angeordnet.

9. Verfahren nach Anspruch 8 mit den folgenden weiteren Schritten:
a. Bereitstellung eines der zwei Gehäuseteile (103, 104), bei dem der Stift (109) an eine Innenseite fixiert ist.
b. Bereitstellung des anderen der zwei Gehäuseteile (103, 104), in das der Wickel (106) eingeschoben ist.
c. Zusammensetzen der Gehäuseteile (103, 104) zu dem Gehäuse (101), wobei der Stift (109) in den axialen Hohlraum (102) des Wickels (106) eingeführt wird.

10. Verfahren nach Anspruch 8 mit einem der folgenden weiteren Merkmalen:
a. Bereitstellung eines der zwei Gehäuseteile (103, 104), bei dem der Stift (109) an eine Innenseite fixiert ist.
b. Der Wickel (106) wird in dieses Gehäuseteil (103) eingeschoben, wobei der Stift (109) in den axialen Hohlraum (102) des Wickels (106) eingeführt wird.
c. Zusammensetzen der Gehäuseteile (103, 104) zu dem Gehäuse (101).

11. Verfahren nach Anspruch 8 mit einem der folgenden weiteren Merkmalen:
a. Bereitstellung des Wickels (106) mit dem Stift, der in dem axialen Hohlraum des Wickels angeordnet ist.
b. Beim Einlegen des Wickels in eines der Gehäuseteile wird der Stift mit diesem Gehäuseteil elektrisch verbunden oder beim Zusammensetzen der Gehäuseteile zu dem Gehäuse wird der Stift mit einem der Gehäuseteile elektrisch verbunden.
